Europäisches Patentamt

(19) European Patent Office

Office européen des brevets

(11) Publication number: **0 461 840 A2**

(12) # EUROPEAN PATENT APPLICATION

(21) Application number: **91305217.1**

(22) Date of filing: **10.06.91**

(51) Int. Cl.$^5$: **G06F 1/04**

(30) Priority: **11.06.90 US 536436**
**24.09.90 US 586944**
**16.05.91 US 701213**

(43) Date of publication of application:
**18.12.91 Bulletin 91/51**

(84) Designated Contracting States:
**AT BE CH DE DK ES FR GB GR IT LI LU NL SE**

(71) Applicant: **NEMONIX INC.**
**25 South Street**
**Hopkinton, Massachusetts 01748 (US)**

(72) Inventor: **Bumbarger, Daniel L.**
**121 Brook Street**
**Hudson Massachusetts 01749 (US)**

(74) Representative: **Cross, Rupert Edward Blount**
**et al**
**BOULT, WADE & TENNANT 27 Furnival Street**
**London EC4A 1PQ (GB)**

(54) External clock unit for a computer.

(57) A computer having an internal clock for outputting clock signals for setting the timing of a central processing unit includes as an addition an external clock unit for outputting clock signals faster than those outputted by the internal clock and which may be used in place of the clock signals outputted by the internal clock. In one embodiment, the external clock unit includes a pair of crystal oscillators, a multiplexor for receiving the clock signals form both crystal oscillators and outputting the clock signal from one of the crystal oscillators, two pairs of jumper pins connected to the multiplexor for setting which clock signal is outputted by the multiplexor, a manually operable switch for turning on or off a voltage signal which is used as an external clock enable signal and a power supply. The external clock unit in that embodiment is connected through the backplane in the computer to a multiplexor in a clock module in the CPU module. The external clock unit enables the operating speed of the CPU to be increased in a very easy manner and without making any internal circuit changes inside the module for the CPU.

EP 0 461 840 A2

## BACKGROUND OF THE INVENTION

The present invention relates generally to computers and more particularly to an external clock unit for use with a computer having an internal clock.

The Digital Equipment Corporation (DEC) MICROVAX 3100 series computers are very well known and widely used computers. These computers have a central processing unit (CPU) module which includes a processor. The processor receives clock signals from a 44.444 MHZ oscillator located in the module. The cycle time of the processor using these 44.444 MHZ clock signals is about 80 nanoseconds.

The DEC 6000 series computers are also well known and widely used computers. A DEC 6000 series computer generally contains one or more central processing unit (CPU) modules, the particular number of CPU modules present in the computer depending on the particular model 6000 series computer. Each CPU module includes, in addition to a CPU, an oscillator which outputs a clock signal which sets the timing (i.e. operating speed) of the computer and a clock signal distribution chip. In the operation of the CPU module, a clock signal from the oscillator is fed into the clock signal distribution chip which distributes the clock signal where needed within the CPU module. The particular frequency of the clock signal obtained from the oscillator is dependent on the particular oscillator used in the DEC 6000 series CPU module. In one such CPU module the oscillator outputs a clock signal frequency of about 50 MHZ while in another CPU module the oscillator outputs a clock signal frequency of about 67 MHZ.

The DEC 8000 series computers are still another very well known and widely used type of computer. A DEC 8000 series computer includes a clock module which includes a multiplexor. An internal clock is coupled to the multiplexor. An output in the multiplexor provides a clock signal to a CPU.

It would be desirable to be able to provide an external clock signal to the above types of computers which could be used in place of the clock signal provided by the internal clock.

Accordingly, it is an object of this invention to provide an external clock unit for producing a clock signal for controlling the timing of the central processing unit in a computer.

Another aspect of this invention provides a computer which includes a CPU, an internal clock for providing clock signals to the CPU and an external clock unit for providing clock signals which can be used in place of the clock signals from the internal clock unit.

Still another aspect of this invention provides an arrangement for changing the operating speed of the central processing unit in a computer without making any hardware changes in the internal circuitry in the computer.

Yet still another aspect of this arrangement provides an arrangement for connecting an external clock unit to certain types of existing computers.

## SUMMARY OF THE INVENTION

An external clock unit constructed to one aspect of this invention for use with a DEC MICROVAX model 3100 computer comprises a first crystal oscillator for generating a clock signal of about 44 MHZ, a second crystal oscillator for generating a clock signal of about 63 MHZ, a 2 to 1 multiplexor for receiving the two clock signals and outputting one of the clock signals, a first switch coupled to said 2 to 1 multiplexor for selecting which of the two clock signals is outputted by the multiplexor, a second switch adapted to be coupled to a system identification code generator in the computer for selecting a system identification code to be emitted by the generator which will enable the computer to pass its self test on start up when either one of the two clock signals are outputted by the multiplexor and power supply means for providing operating power to the device. The 44 MHZ clock signal produced by the device is used for test purposes while the 63 MHZ clock signal is used to provide a clock signal which is different, i.e. faster, than that attainable using the 44 MHZ internal clock in the CPU module.

An external clock unit according to another embodiment of the invention for use with a DEC 6000 series computer is adapted to be connected to the clock signal distribution chip in the CPU module in that computer using two pins on the chip that are normally used only for test purposes during fabrication. The external clock unit is constructed so as to produce a clock signal which is faster (i.e. higher) than the clock signal which is produced by the oscillator which is in the CPU module. The external clock unit includes a power supply, an oscillator, a driver and a manually operable on-off switch. When the switch is in the "on" position, a control signal is sent to the clock signal distribution chip to enable the clock signal from the external clock unit and disable the clock signal from the oscillator on the CPU module. When the switch is in the off position, there is no enable signal and the CPU module operates using the oscillator that is on the CPU module.

An external clock unit according to still another embodiment of the invention for use with a DEC 8000 series computer comprises a first crystal oscillator for generating a first clock signal, a second crystal oscillator for generating a second clock signal, a multiplexor for receiving said first clock signal and said second clock signal and outputting one of said clock signals, a first line driver for driving the clock signal outputted by the multiplexor, a second line driver for driving a clock enable signal, and power supply means for providing power to said first crystal oscillator, said second crystal oscillator, said multiplexor and said first and second line drivers. When being used, the external clock unit is connected to the clock module in the computer through the backplane.

Various features and advantages will appear from the description to follow. In the description, reference is made to the accompanying drawings which form a part thereof, and in which is shown by way of illustration, specific embodiments for practicing the invention. These embodiments will be described in sufficient detail to enable those skilled in the art to practice the invention, and it is to be understood that other embodiments may be utilized and that structural changes may be made without departing from the scope of the invention. The following detailed description is therefore not to be taken in a limiting sense, and the scope of the present invention is best defined by the appended claims.

BRIEF DESCRIPTION OF THE DRAWINGS

In the drawings wherein like reference numerals represent like parts:

Fig. 1 is a simplified schematic diagram of the CPU module in a DEC MICROVAX model 3100 computer;

Fig. 2 is a schematic diagram of an external clock unit constructed according to the teachings of this invention for use with the DEC MICROVAX model 3100 computer shown in Fig. 1;

Fig. 3 is a diagram showing how the external clock unit in Fig. 2 is operatively connected to the CPU module shown in Fig. 1;

Fig. 4 is a simplified schematic diagram of the CPU module in one type of DEC 6000 series computer;

Fig. 5 is a schematic diagram of another embodiment of an external clock unit constructed according to the teachings of this invention for use with the DEC 6000 series computer CPU module shown in Fig. 4;

Fig. 6 is a diagram showing how the external clock unit shown in Fig. 5 is operatively connected to the CPU module shown in Fig. 4; and

Fig. 7 is a block diagram of another embodiment of an external clock unit constructed according to this invention and connected to a DEC 8000 series computer.

DETAILED DESCRIPTION OF PREFERRED EMBODIMENTS

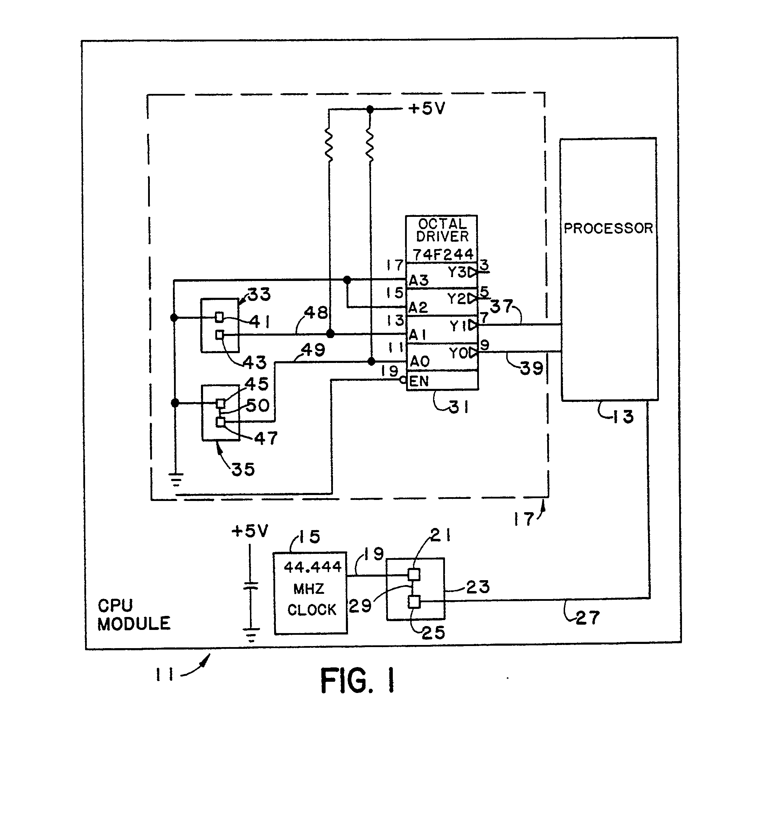

Referring now to the drawings, there is shown in Fig. 1 a simplified schematic diagram of the CPU module in a DEC MICROVAX model 3100 computer, the module being identified by reference numeral 11. Parts of module 11 not pertinent to the invention are not shown.

Module 11 includes a processor 13, a 44.444 MHZ crystal oscillator 15 and a system identification code generator 17. Oscillator 15 is used to provide a clock signal for processor 15 while system identification code generator 17 is used to provide logic signals to processor 13 when the module is undergoing a self test routine on start-up.

Oscillator 15 is connected through a line 19 to pin 21 of a two pin connector 23. The other pin of connector 23, namely pin 25, is connected to a line 27 which is connected to processor 13. Pins 19 and 25 are normally electrically coupled to each other through a removable jumper 29, as shown.

System identification code generator 17 includes an octal driver 31, first and second two pin connectors 33 and 35, respectively, and associated circuitry. The outputs of octal driver 31 are over lines 37 and 39 and are connected to processor 13. The computer is programmed such that if the output signals over lines 37 and 39 are a logic 1 and a logic 0, respectively, then the computer will pass a self test on start up if the processor cycle time is about 80 nanoseconds (i.e. the cycle time attainable with a clock signal of about 44 MHZ). On the other hand if the output signals are a logic 0 and a logic 1, respectively, then the computer will pass a self test on start up for a 60 nanosecond processor cycle time (i.e. a 63 MHZ clock signal). Connector 33 includes two pins numbered 41 and 43 while connector 35 includes two pins numbered 45 and 47. Pins 41 and 45 are connected to ground. Pins 43 and 47 are connected by line 48 and 49 to driver 31. Normally, pins 41 and 43 of connector 33 are not connected while pins 45 and 47 of connector 35 are connected by a jumper 50 so as to provide the logic 1 and a logic 0 outputs from lines 37 and 39, respectively.

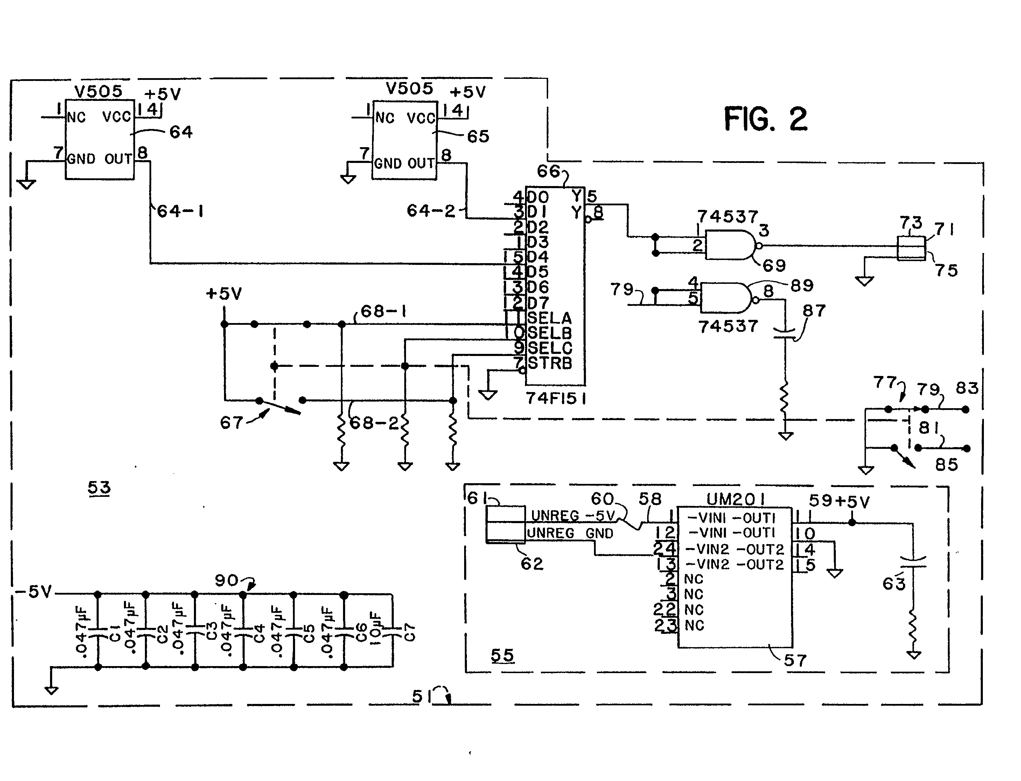

Referring now to Fig. 2, there is shown a schematic diagram of an external clock unit constructed according to the teachings of this invention for use with the DEC MICROVAX model 3100 computer, the unit being identified by reference numeral 51.

Unit 51 includes an operating section 53 and a power supply section 55.

Power supply section 55 provides power to operating section 53. Power supply section 55 includes a DC to DC converter 57 which receives an unregulated +5 volt input over line 58 and produces a regulated +5 volt output over a line 59. Line 58 includes a fuse 60. The unregulated +5 volt input is received from pin 61 of a two pin connector 62. A LED 63 is coupled to the regulated +5V output of DC to DC converter 57 to indicate if there is a signal over line 59.

Operating section 53 includes a 44.444 MHZ crystal oscillator 64 and a 63.0 MHZ crystal oscillator 65. Crystal oscillator 64 is used to provide a clock signal for testing purposes as will hereinafter be explained while oscillator 65 is used to provide a higher clock signal than attainable from oscillator 15.

The output signal from crystal oscillators 64 and 65 are applied over lines 64-1 and 64-2, respectively, to a 2 to 1 multiplexor 66 which selects which oscillator signal is to be outputted.

A first two position toggle switch 67 is coupled at one end to +5 volts and at the other end to multiplexor 66 and is used to select which oscillator signal from oscillators 64 and 65 is outputted. When switch 67 is in a first position (as shown), +5 volts is applied over line 68-1 to pin 11 in multiplexor 65 and the oscillator signal from oscillator 64 is selected while when switch 67 is in a second position +5 volts is applied over line 68-2 to pin 9 in multiplexor 66 and the oscillator signal from oscillator 65 is selected. The output signal from multiplexor 66 is driven by a line driver 69 to pin 71 in a connector 73. Connector 73 also includes a pin 75 which is connected to ground. A second two position toggle switch 77 is connected at one end to ground and at the other end to either one of a pair of lines 79 and 81 which terminate in terminals 83 and 85, respectively. A LED 87 coupled to line 79 through a line driver 89 indicates when switch 77 is closed on line 79.

Operating section 53 also includes a bank of bipass capacitors 90 for eliminating noise, one capacitor being connected to each component. For simplicity, the connections are not shown.

Switch 67 and switch 77 are ganged together (as shown by the dotted line).

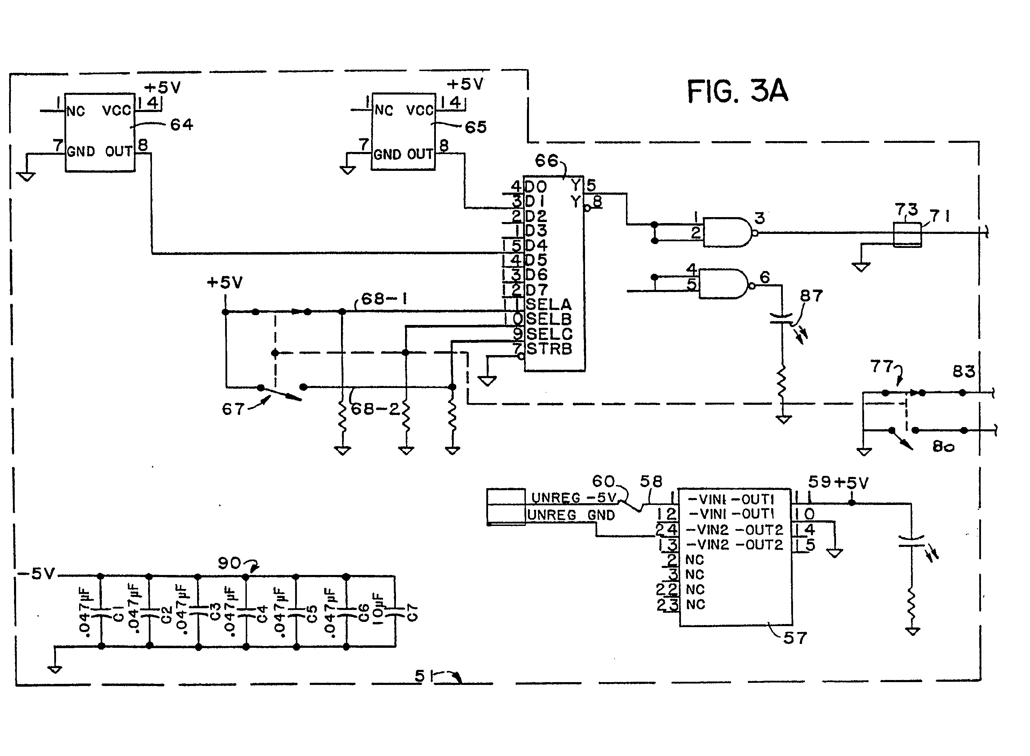

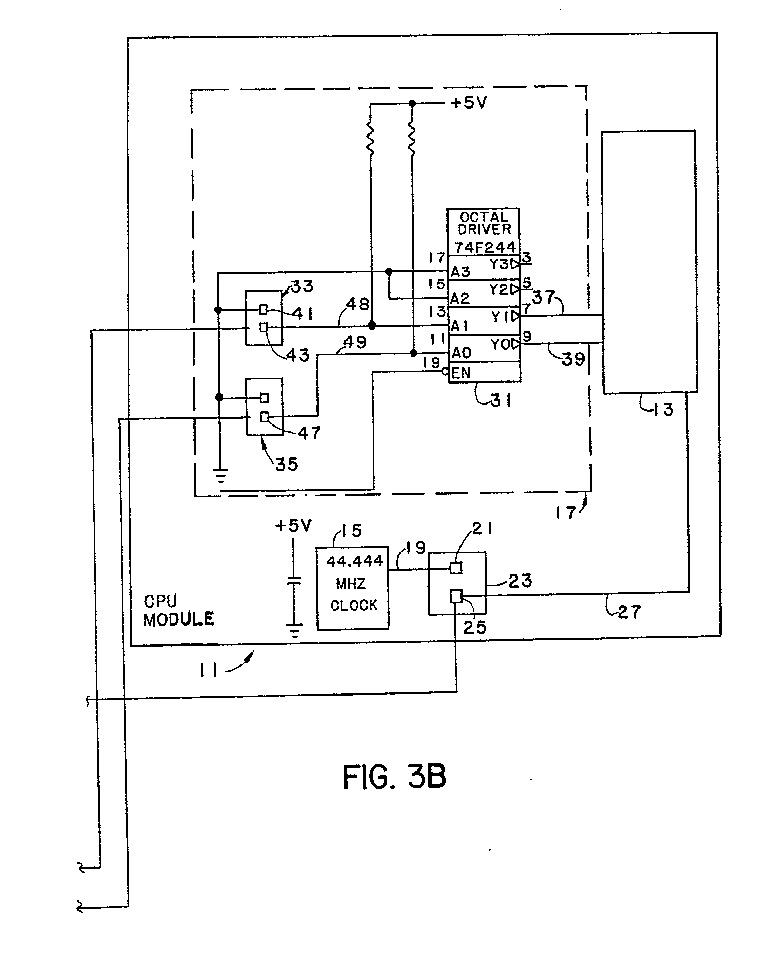

Referring now to Fig. 3, there is shown a schematic diagram of how device 51 is electrically connected to module 11. As can be seen, pin 71 in device 51 is connected to pin 25 of connector 23 in CPU module 11 and terminals 83 and 85 coupled to switch 77 are connected to pins 43 and 47 in connector 35. As can also be seen, the two jumpers 29 and 50 have been removed.

With the two switches arranged as shown, the 63.0 MHZ clock signal is fed into processor 13 along with the 0 and 1 logic signals. On the other hand, when the two switches are moved to their other position, the 44.444 MHZ signal is fed into processor 13 along with the 1 and 0 logic signal.

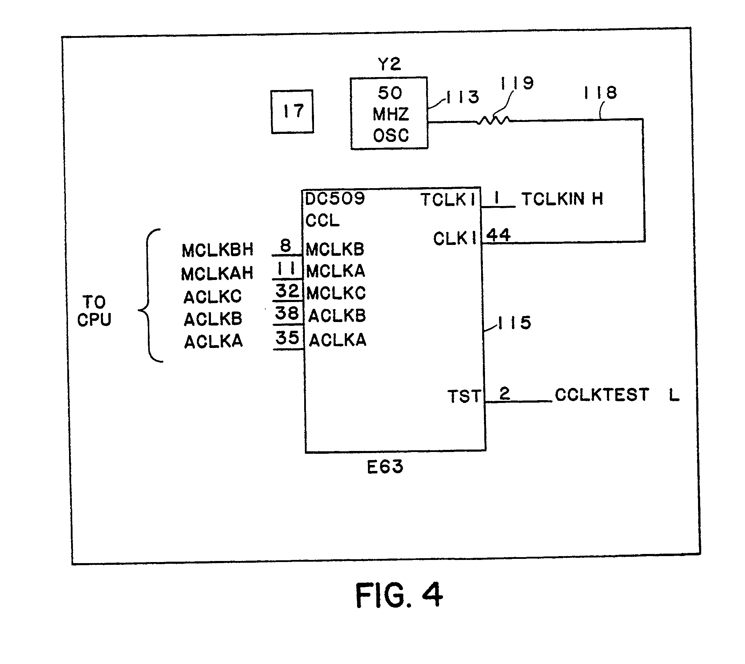

Referring now to Fig. 4 there is shown a simplified schematic diagram of a CPU module in one type of DEC 6000 series computer, the CPU module being identified by reference numeral 111. Parts of module 111 not pertinent to the invention are not shown.

Module 111 includes a 50 MHZ crystal oscillator 113, a clock signal distribution chip 115 and a capacitor 117. Oscillator 113 is used to generate the clock signals for CPU module 111. Chip 115 is in the form of a gate array. The output of oscillator 113 is connected by line 118 to pin 44 in chip 115 through a resistor 119. Capacitor 117 is coupled to an unregulated +5 volts obtained from a supply (not shown).

In the normal operation of CPU module 111, the clock signal from oscillator 113 is fed into chip 115 where it is distributed throughout the module as needed.

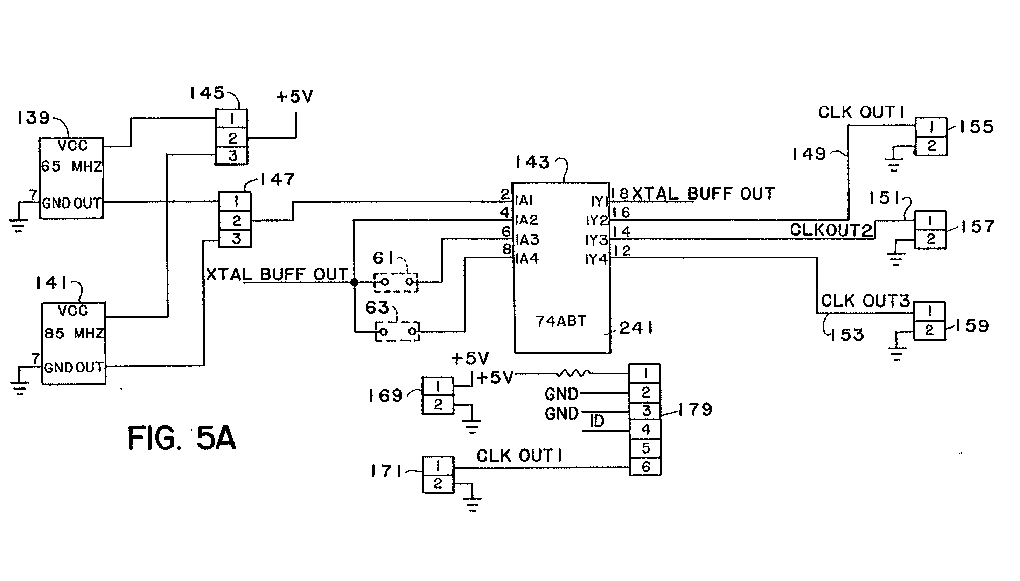

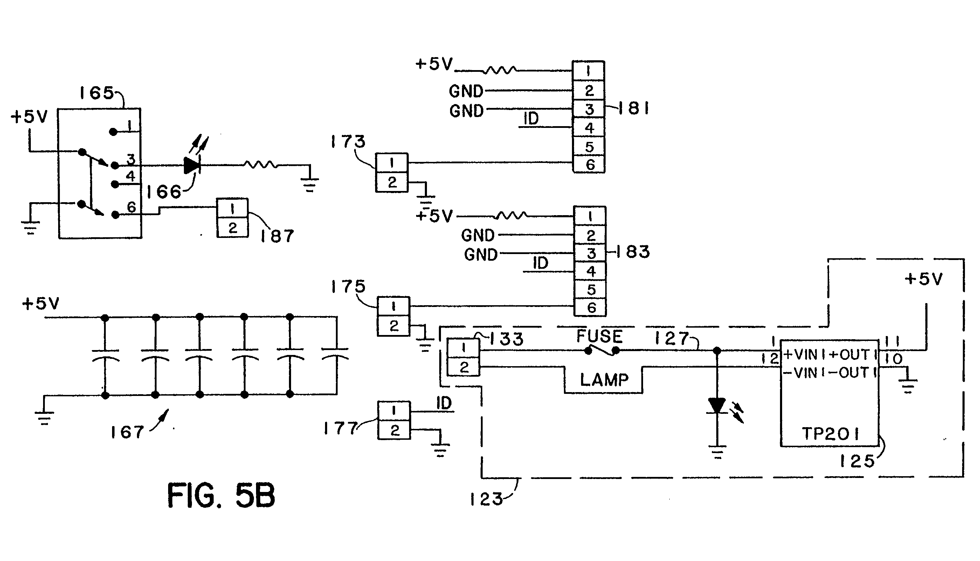

Referring now to Fig. 5 there is shown a schematic diagram of an external clock unit constructed according to the teachings of this invention which may be used for increasing the operating speed of a DEC 6000 series computer, the external clock unit being identified by reference numeral 121.

Clock unit 121 includes a power supply 123 which provides the necessary power for operating external clock unit 121. Power supply 123 includes a DC to DC converter 125 which receives an unregulated +5 volts DC from CPU module 111 over line 127 and outputs a regulated +5 volts over a line 129. Line 127 includes a one amp fuse 131. Line 127 is connected at its input end to pin 1 of a two pin connector 133. An LED 135 is coupled by a line 137 to line 127 and serves to indicate if the unregulated +5 volts is being received over line 127.

Clock unit 121 further includes a 65 MHZ crystal oscillator 139, an 85 MHZ crystal oscillator 141 and a driver 143.

The input of oscillator 139 is connected to pin 1 of a three pin jumper 145 and the input of oscillator 141 is connected to pin 3 of jumper 145. Pin 2 of jumper 145 is connected to the regulated +5 volts. The output of oscillator 139 is connected to pin 1 of a three pin jumper 147 and the output of oscillator 141 is connected to pin 3 of jumper 147. Pin 2 of jumper 147 is connected to driver 143. As can be appreciated, jumper 145 is used to determine which oscillator will receive an input voltage and jumper 145 is used to determine which oscillator is coupled to driver 143.

Thus, driver 143 will receive either a 65 MHZ signal from oscillator 139 or an 85 MHZ signal from oscillator 141, depending on how the jumpers are jumpered.

Driver 143 has three clock output lines numbered 149, 151 and 153. Line 149 is connected to pin 1 of a two pin connector 155; line 151 is connected to pin 1 of a two pin connector 157 and line 153 is connected to pin 1 of a two pin connector 159. A pair of two pin jumpers 161 and 163 are also connected to driver 143. When neither jumper 161 nor jumper 183 are jumpered there is an output on only line 149. When jumper 161 is jumpered there are outputs on lines 149 and 151 and when jumpers 161 and 163 are jumpered there are outputs on lines 149, 151 and 153. Thus, clock unit 121 can provide from one to three clock signal outputs and can thus serve a computer having up to three CPU modules.

Clock unit 121 further includes a manually operable on-off switch 165, a bank of capacitors 167 and a group of connectors 169 through 183.

A LED 166 is coupled to switch 165 to indicate when switch 165 is in the "on" position. When switch 165 is in the "on" position, a control signal which is used as an external clock enable signal is outputted over line 185 to connector 187.

Capacitors 167 are used for eliminating noise, one capacitor being connneced to each component.

Connectors 155, 157 and 159 are adapted to be connected to connectors 171, 173 and 175 respectively. Connector 177 is adapted to be connected to connector 187. Connector 169 is adapted to be connected to connector 133. Connectors 179, 181 and 183 are used to connect unit 21 to connectors on cables adapted to be connected to CPU modules.

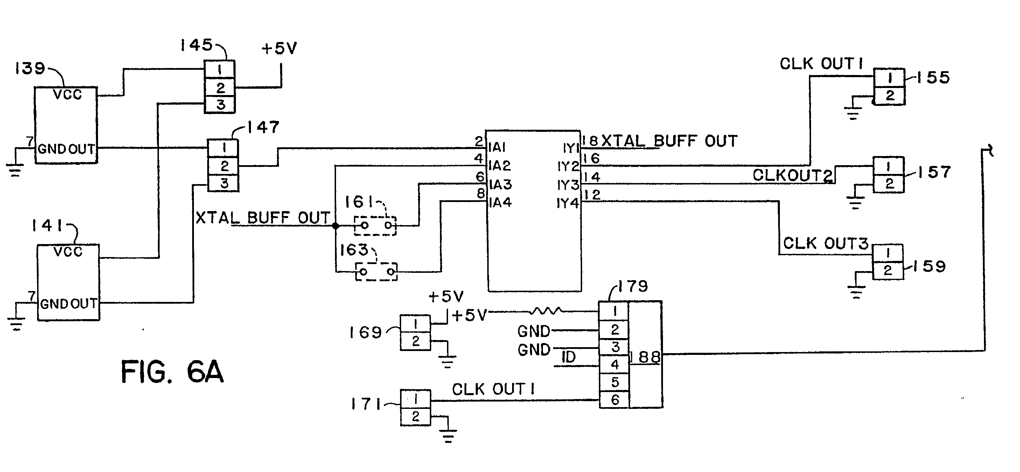

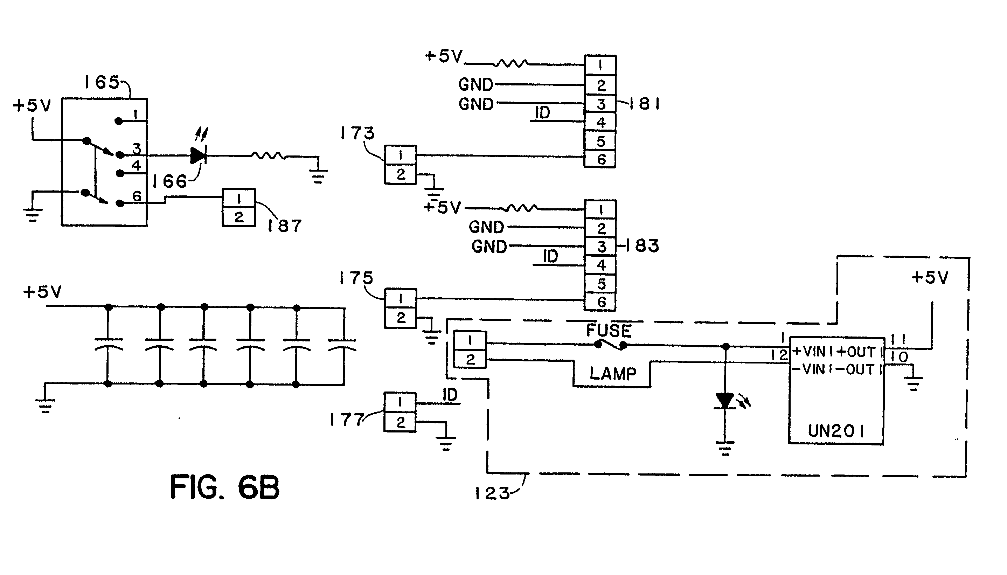

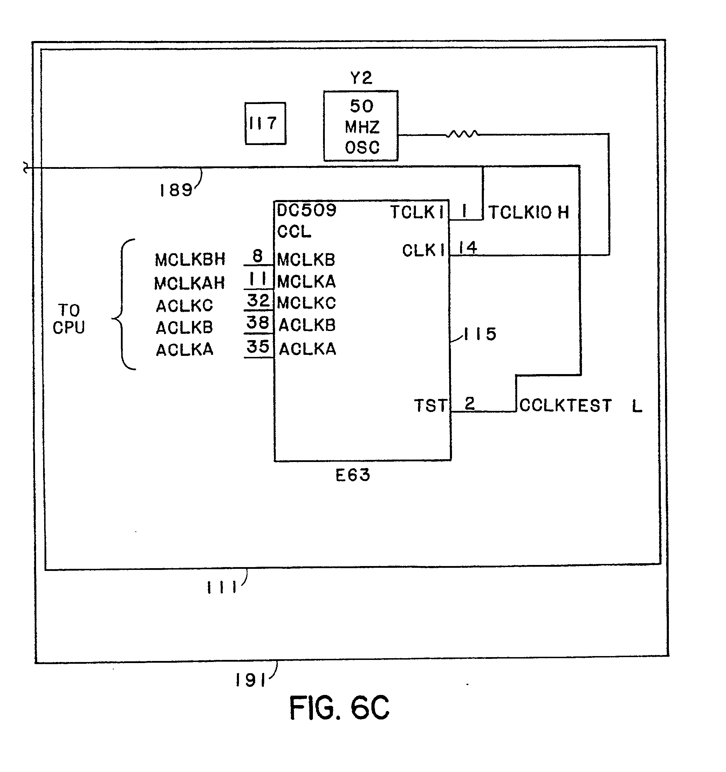

Referring now to Fig. 6 there is shown a schematic diagram illustrating how external clock unit 121 is connected to a computer 191 having one CPU module 111. As can be seen, connector 179 is connected to a connector 188 which is attached by a cable 189 to pins 1 and 2 in chip 115. As can also be seen, neither jumper 161 nor jumper 163 are jumpered since there is only one CPU module in the particular computer 191 with which device 221 is being used.

If the CPU module with which the clock unit is to be used has a 143 MHZ oscillator, then one of the crystal oscillators, such as the 65 MHZ crystal oscillator, will be replaced with a 185 MHZ crystal oscillator and then used to provide the clock signal.

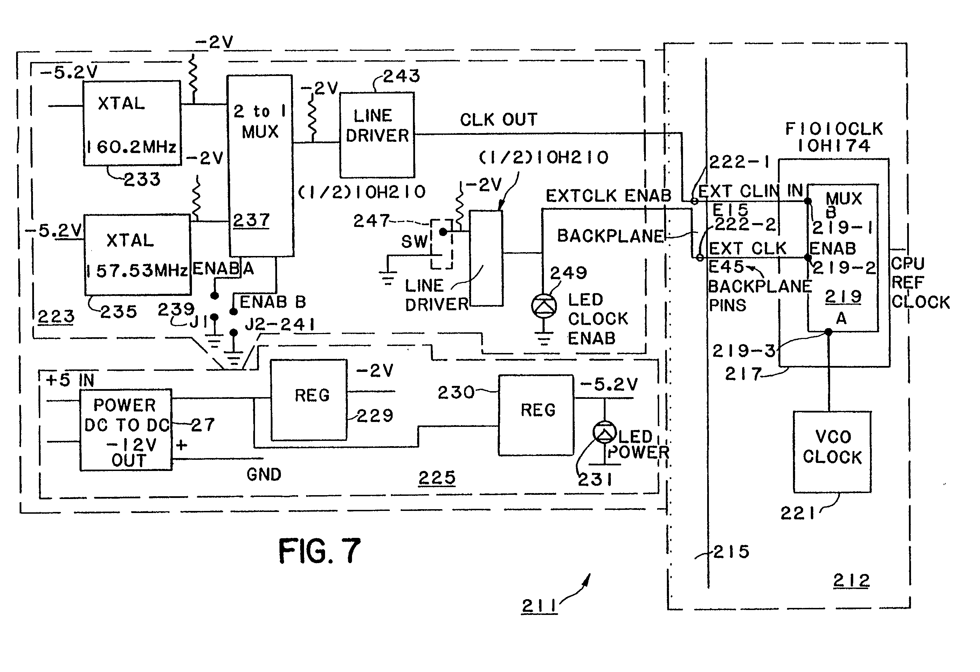

Referring now to Fig. 7 there is shown another embodiment of an external clock unit constructed according to the teachings of the present invention, the unit being identified generally by reference numeral 211. Also shown in Fig. 7 is a portion of a DEC 8000 series computer 212.

The portion shown of computer 212 includes a backplane 215 and an F1010 clock module 217. Module 217 includes a 10H174 multiplexor 219. A 133 MHZ VC0 (internal) clock 221 is coupled to module 217. Multiplexor 219 has a pair of inputs 219-1 and 219-2 which are connected to pins 222-1 and 222-2 respectively in backplane 215 and an input 219-3. The output clock signal for clock module 217 is over line 222-3 and is sent to the CPU (not shown) in computer 212. Other parts of computer 212 not pertinent to this invention are not shown.

External clock unit 211 includes an operating section 223 for generating clock signals and a power supply section 225 for providing power to operating section 223.

Power supply section 225 includes a DC to DC power converter 227 which receives a +5 volt input from a pair of pins (not shown) on backplane 215 of computer 212 and produces a -12 volt output. The -12 volt output is fed into a -2 volt regulator 29 which produces a constant -2 volt output and a -5.2 volt regulator which produces a constant -5.2 volt output. An LED 231 is coupled to the -5.2 v output line and is used to indicate if the power section is on.

Operating section 223 includes a 160.2 MHZ crystal oscillator 233 and a 157.33 MHZ crystal oscillator 235. Crystal oscillator 233 is used to provide a clock signal for computer 212 while crystal oscillator 235 is used for maintenance purposes.

The output signals from crystal oscillators 233 and 235 are applied to a 2 to 1 multiplexor 237 which selects which oscillator signal is to be outputted. When a first jumper 239 is connected to ground the signal from crystal oscillator 233 is outputted and when a second jumper 241 is connected to ground the signal from crystal oscillator 235 is outputted.

The output signal from multiplexor 237 is driven by a driver 243 into input 219-1 of multiplexor 219 through pin 222-1 in backplane 215. An external clock enable signal is driven by a driver 245 into input 219-2 of multiplexor 219 through pin 222-2 in backplane 215. Driver 45 is turned "on" or "off" by a manually operated toggle switch 247. An LED 249 indicates when driver 245 is in the "on" position.

In the absence of an external clock enable signal at pin 222-2, from driver 245, multiplexor 219 outputs the 133 MHZ signal from clock 221. On the other hand, when an external clock enable signal is received from driver 245 the signal from clock 221 is disabled, and multiplexor 219 outputs the EXT CLIN IN signal received from pin 222-1

The embodiments of the present invention are intended to be merely exemplary and those skilled in the art shall be able to make numerous variations and modifications to it without departing from the spirit of the present invention. All such variations and modifications are intended to be within the scope of the present invention as defined in the appended claims.

Claims

1. An external clock unit for use with a computer having an internal clock, said external clock unit comprising:

    a. means for generating an external clock signal,

    b. means for driving the external clock signal,

    c. means for transmitting said external clock signal to said computer,

    d. means for generating a control signal, for enabling said external clock signal to said computer, and

    e. a power supply for providing power to the components in said clock.

2. The external clock unit of claim 1 and wherein the means for generating the external clock signal comprises a first oscillator.

3. The clock of Claims 1 or 2 and wherein the means for driving the external clock signal has a plurality of outputs.

4. An external clock unit for a DEC MICROVAX model 3100 computer, the DEC MICROVAX model 3100 computer having a CPU module which includes a processor, an oscillator for providing a clock signal of about 44 MHZ to said processor and a system identification code generator adapted to output a first set of logic signals for use with a processor cycle time of 80 ns and a second set of logic signals for use with a process or having a cycle time of 60 ns, the device comprising,

    a. a first crystal oscillator for generating a clock signal of about 44 MHZ,

    b. a second crystal oscillator for generating a clock signal of about 63 MHZ,

    c. a 2 to 1 multiplexor for receiving said two clock signals and outputting one of said clock signals,

    d. first switch means for selecting which clock signal is to be outputted by the multiplexor,

    e. a second switch means adapted to be connected to said system identification code generator for selecting which pair of logic signals is to be outputted by said signal identification code generator, and

    f. power supply means for providing operating power for said device.

5. The external clock unit of any one of Claims 1 to 3 wherein said computer is either a DEC 6000 series computer or a DEC 8000 series computer.

6. A computer comprising a CPU module having an oscillator for outputting an internal clock signal and an external clock unit coupled to said CPU module for providing an external clock signal for use in place of the internal clock signal, said external clock unit including a oscillator and a power supply.

7. The computer of any one of the preceding claims and wherein said clock permit further includes a line driver coupled to a said oscillator for driving the clock signal outputted by the oscillator.

8. The computer of any one of the preceding claims and wherein said clock further includes a manually operated switch coupled to a voltage signal for outputting a control signal.

## FIG. I

FIG. 2

EP 0 461 840 A2

FIG. 3A

EP 0 461 840 A2

FIG. 3B

FIG. 4

FIG. 5A

EP 0 461 840 A2

FIG. 5B

EP 0 461 840 A2

EP 0 461 840 A2

139

VCC

7 GND OUT

145

+5V

1
2
3

147

1
2
3

141

VCC

7 GND OUT

XTAL BUFF OUT

161

163

2 IA1
4 IA2
6 IA3
8 IA4

IY1 18 XTAL BUFF OUT
IY2 16
IY3 14
IY4 12

CLK OUT1

155

1
2

157

1
2

CLKOUT2

CLK OUT3

159

1
2

+5V

169

1
2

179

+5V
GND
GND ID

1
2
3
4
5
6

188

171

1
2

CLK OUT1

**FIG. 6A**

14

FIG. 6B

EP 0 461 840 A2

FIG. 6C

FIG. 7